# EUROPÄISCHE PATENTSCHRIFT

(11) **EP 2 255 207 B1**
(45) Veröffentlichungstag und Bekanntmachung des Hinweises auf die Patenterteilung: **01.04.2015**
(21) Anmeldenummer: 09719133.2
(22) Anmeldetag: 28.01.2009
(51) Int. Cl.: G01P 3/44, G01P 3/487

(54) **WINKELMESSSYSTEM UND VERFAHREN ZUR HERSTELLUNG EINES WINKELMESSSYSTEMS**
ANGLE MEASURING SYSTEM AND METHOD FOR PRODUCING AN ANGLE MEASURING SYSTEM
SYSTEME DE MESURE ANGULAIRE ET PROCEDE DE FABRICATION D'UN SYSTEME DE MESURE ANGULAIRE

(30) Priorität: 10.03.2008 DE 102008013377
(43) Veröffentlichungstag der Anmeldung: 01.12.2010
(73) Patentinhaber: Dr. Johannes Heidenhain GmbH, 83301 Traunreut (DE)
(72) Erfinder: MITTERREITER, Johann, 83339 Chieming (DE)
(86) Internationale Anmeldenummer: PCT/EP2009/050935
(87) Internationale Veröffentlichungsnummer: WO 2009/112303

(56) Entgegenhaltungen:
- EP-A- 1 130 362
- EP-A- 1 291 660
- US-A1- 2006 278 022

## Beschreibung

Die Erfindung betrifft ein Winkelmesssystem gemäß dem Anspruch 1, und ein Verfahren zur Herstellung eines entsprechenden Winkelmesssystems gemäß dem Anspruch 8.

Derartige Winkelmesssysteme dienen zur Messung von Drehbewegungen bzw. Drehstellungen eines Maschinenteils, etwa einer Welle. Die Drehbewegung wird dabei entweder inkremental oder absolut erfasst, der ausgegebene Messwert ist z. B. eine Folge von Zählimpulsen, ein Zählerwert oder ein Codewort. Entsprechende Winkelmesssysteme werden insbesondere in so genannten Pick-and-Place-Maschinen in der Fertigung von elektronischen Bauteilen verwendet, oder in Werkzeugmaschinen für die Messung von rotatorischen Bewegungen eingesetzt. Die Reproduzierbarkeit, bzw. Wiederholbarkeit der Drehwinkel von Maschinenteilen auf nur wenige Winkelsekunden genau ist beispielsweise bei Pick-and-Place-Maschinen von großer Bedeutung. Bei Werkzeugmaschinen ist insbesondere die absolute Genauigkeit der Messergebnisse eines Winkelmesssystems entscheidend.

Es sind Winkelmesssysteme bekannt, die eine eigene Lagerung der relativ zueinander drehbaren Bauteile aufweisen.

Die Genauigkeit einer Winkelmessung wird wesentlich durch die Güte der Winkelskalierung, deren Exzentrizität und durch die Rundlauf-Abweichungen der Lagerung bzw. Taumelfehler beeinflusst.

Aus der EP 1 291 660 A2 ist ein Lager mit einem magnetisierten Teilungsring bekannt, welcher nach dem Aufbringen der magnetischen Pole an einem Träger befestigt wird.

Weiterhin ist in dem Dokument EP 1 130 362 A2 ein Encoder, welcher auf einem magnetischen Abtastprinzip beruht, beschrieben sowie ein Verfahren zur Herstellung eines Teilungsringes für einen derartigen Encoder. Gemäß jenem Verfahren sind die Joche der Magnetisierungsvorrichtung an gegenüber liegenenden Oberflächen des Teilungsrings angeordnet, so dass zur Erhöhung der Magnetisierungsstärke der magnetische Fluss das Material des Teilungsrings während der Magnetisierung vollständig durchdringt.

Die Offenlegungsschrift US 2006/0278022 A1 offenbart ein Lager mit einer Drehzahlerfassungseinrichfung, an deren Nabe ein Teilungsring montiert ist. zur Erhöhung der Messgenauigkeit wird dort ein adaptiver Filter zur Signalauswertung verwendet.

In der Offenlegungsschrift DE 30 36 005 A1 ist ein Verfahren zum Herstellen einer Winkelskalierung für ein Winkelmesssystem offenbart, bei welchem auf eine Codescheibe Codespuren durch einen Laserstrahl aufgebracht werden. Die Codescheibe ist beim Beschreiben bereits mit einer Welle verbunden, so dass die Codescheibe beim Beschreiben des Codemusters bereits gegenüber der Welle zentriert ist.

Diese bekannten Verfahren weisen den Nachteil auf, dass die damit hergestellten Winkelmesssysteme nicht höchste Genauigkeiten erreichen, für viele Anwendungen nicht ausreichend robust sind und überdies relativ viel Bauraum benötigen.

Der Erfindung liegt die Aufgabe zugrunde, ein robustes Winkelmesssystem und ein Verfahren zu dessen Herstellung zu schaffen, welches sich insbesondere dadurch auszeichnet, dass in einfacher Bauweise ein sehr genau arbeitendes kompaktes Winkelmesssystem realisierbar ist.

Diese Aufgabe wird durch ein Winkelmesssystem gemäß dem Anspruch 1 gelöst. Demnach umfasst das Winkelmesssystem eine erste Bauteilgruppe, eine zweite Bauteilgruppe und einen Sensor, wobei die erste Bauteilgruppe relativ zur zweiten Bauteilgruppe um eine Achse drehbar gelagert ist. Dabei weist die erste Bauteilgruppe einen Ring mit einer Lauffläche und mit einer Winkelskalierung auf. Die zweite Bauteilgruppe weist einen weiteren Ring mit einer weiteren Lauffläche und den Sensor zur Abtastung der Winkelskalierung auf. Zwischen den Laufflächen der ersten und der zweiten Bauteilgruppe sind Wälzkörper angeordnet. Die Winkelskalierung ist in der Weise aufgebracht, dass ein geometrisches Muster der Winkelskalierung in einem ersten Bereich von einem geometrischen Muster der Winkelskalierung in einem zweiten Bereich in Abhängigkeit von Rundlaufabweichungen der Laufflächen und / oder der Wälzkörper abweicht.

Die geometrischen Muster der Winkelskalierung des Winkelmesssystems sind also unter anderem abhängig von den individuellen Maßen bzw. Maßabweichungen der jeweiligen im Winkelmesssystem vorliegenden Laufflächen und/oder der Wälzkörper.

Die Winkelskalierung ist auf einer Komponente der ersten Bauteilgruppe aufgebracht, wobei die Komponente als ein separates Bauteil, etwa als ein Teilungsring, mit dem Ring drehfest verbunden sein kann oder aber als integraler Bestandteil des Ringes der ersten Bauteilgruppe ausgestaltet sein kann. Letzteres trifft etwa dann zu, wenn die Winkelskalierung direkt auf dem Ring aufgebracht ist.

Mit Vorteil weist der Ring der zweiten Bauteilgruppe eine radial durchgängige Öffnung auf, durch welche die Winkelskalierung aufbringbar ist. Dabei kann die Öffnung so ausgestaltet sein, dass diese eine axiale Ausdehnung aufweist, die weniger als 1/3, insbesondere weniger als 1/5, des axialen Außenmaßes des Rings der zweiten Bauteilgruppe beträgt.

Im Übrigen sind die Laufflächen diejenigen Flächen bzw. Bahnen, entlang welcher die Wälzkörper im Betrieb des Winkelmesssystems abrollen. Die Laufflächen des Rings der ersten Bauteilgruppe können aus achsparalleler Sicht konvex ausgebildet sein, während die Laufflächen des Rings der zweiten Bauteilgruppe konkav sein können.

Gemäß einer bevorzugten Bauweise des Winkelmesssystems ist der Ring der ersten Bauteilgruppe radial innen liegend und kann dann auch als Innenring bezeichnet werden, während der Ring der zweiten Bauteilgruppe in diesem Fall radial außen liegend angeordnet ist und als Außenring definiert werden kann.

Mit Vorteil ist die Winkelskalierung an einer Mantelseite des Teilungsrings angeordnet. Unter dem Begriff Mantelseite ist eine zylindrische Oberfläche bzw. Umfangsfläche zu verstehen, die entweder um 360° geschlossen ist oder nur einen Teil einer Umfangsfläche darstellt. Die Winkelskalierung kann dann mit einer Richtungskomponente parallel zur Achse ausgerichtet sein.

Häufig besteht die Winkelskalierung aus Bereichen mit unterschiedlicher magnetischer Polarisierung. In diesem Fall sind dann die magnetisierten Bereiche mit einer Richtungskomponente parallel zur Achse ausgerichtet, so dass sich quasi als magnetische Teilungsstriche in Umfangsrichtung Nordund Südpole abwechseln. Insbesondere kann die Winkelskalierung auch aus mehreren Spuren bestehen, beispielsweise wenn von der Winkelskalierung unmittelbar die absolute Winkellage einer zu messenden Welle ermittelbar sein soll.

Alternativ oder ergänzend zur im Wesentlichen axialen Ausrichtung der Winkelskalierung kann die Winkelskalierung auch mit einer radialen Richtungskomponente ausgerichtet sein. In diesem Fall wird zumindest ein Teil der Winkelskalierung stirnseitig auf die betreffende Komponente der ersten Bauteilgruppe aufgebracht.

In weiterer Ausgestaltung der Erfindung ist die Winkelskalierung auf einer Komponente, insbesondere einem Teilungsring, der ersten Bauteilgruppe aufgebracht, welche aus einem magnetisierbaren Material besteht. In vorteilhafter Weiterbildung der Erfindung kann der Teilungsring aus einem hartmagnetischen Material mit einer Koerzitivfeldstärke von mindestens 1 kA/m bestehen. Mit Vorteil beträgt die Koerzitivfeldstärke zwischen 10 kA/m und 60 kA/m, insbesondere zwischen 25 kA/m und 45 kA/m.

Als Sensor kann beispielsweise ein MR-Sensor oder ein Hall-Sensor verwendet werden.

Besonders gute Messgenauigkeiten des Winkelmesssystems werden erreicht, wenn die erste Bauteilgruppe und die zweite Bauteilgruppe, sowie die Wälzkörper so ausgestaltet sind, dass die erste Bauteilgruppe und die zweite Bauteilgruppe axial und / oder radial spielfrei zueinander angeordnet sind.

Mit Vorteil können die erste und die zweite Bauteilgruppe jeweils zwei Laufflächen aufweisen zwischen denen jeweils Wälzkörper angeordnet sind. Die Winkelskalierung sowie die Öffnung, durch welche die Winkelskalierung aufbringbar ist, können dann axial zwischen diesen Laufflächen angeordnet sein.

Gemäß einer Weiterbildung der Erfindung ist der Ring der zweiten Bauteilgruppe massiv ausgestaltet und weist in Umfangsrichtung zur Öffnung versetzt eine erste Ausnehmung zur Aufnahme einer Leiterplatte mit einer elektronischen Schaltung auf.

Mit Vorteil ist das Winkelmesssystem so ausgestaltet, dass dessen maximale axiale Ausdehnung weniger als 40 %, insbesondere weniger als 30 % des maximalen Außenradius des Winkelmesssystems beträgt. Weiterhin ist es vorteilhaft, wenn das Winkelmesssystem eine relativ große Öffnung zur Aufnahme einer zu messenden Welle aufweist, wobei der Radius der Öffnung mit Vorteil mindestens 50 %, insbesondere mindestens 60 % des maximalen Außenradius des Winkelmesssystems beträgt. Diese Öffnung wird beispielsweise durch den Innendurchmesser des Innenrings begrenzt, während dann der Außenradius des Außenrings den Außenradius des Winkelmesssystems darstellt.

Weiterhin wird die Aufgabe durch ein Verfahren gemäß dem Anspruch 8 gelöst. Dabei werden in einem Verfahrensschritt zunächst die Ringe der beiden Bauteilgruppen hergestellt, wobei an diesen jeweils zumindest eine fein bearbeitete Lauffläche erzeugt wird. Danach folgt ein Zusammenbauen des Winkelmesssystems in einer Weise, dass die Lauffläche des ersten Rings der Lauffläche des zweiten Rings gegenüber liegt und die Wälzkörper zwischen beiden Laufflächen angeordnet sind, in der Weise, dass die erste Bauteilgruppe und die zweite Bauteilgruppe axial spielfrei zueinander angeordnet sind. Später werden die Ringe an relativ zueinander drehbaren Elementen - beispielsweise einem Statorblock und einer Welle - einer Teilungsmaschine festgelegt. In einem weiteren Verfahrensschritt erfolgt ein Aufbringen der Winkelskalierung auf eine Komponente der ersten Bauteilgruppe, wobei in diesem Schritt die Ringe in der Teilungsmaschine relativ zueinander um die Achse gedreht werden.

Mit Vorteil wird in den Ring der zweiten Bauteilgruppe eine, insbesondere radial orientierte, Öffnung eingearbeitet. Das Aufbringen der Winkelskalierung auf die betreffende Komponente der ersten Bauteilgruppe erfolgt dann unter Verwendung der Öffnung.

Die Winkelskalierung kann so beschaffen sein, dass durch diese nur inkrementale Winkellageinformationen auslesbar sind oder aber auch ergänzend oder alternativ dazu absolute Winkelpositionen.

In weiterer Ausgestaltung der Erfindung wird zum Aufbringen einer Winkelskalierung, die aus Bereichen mit unterschiedlicher magnetischer Polarisierung besteht, in die Öffnung ein magnetischer Schreibkopf eingeführt und die Winkelskalierung aufgebracht. Mit Vorteil besteht die Komponente der ersten Bauteilgruppe, auf welche die Winkelskalierung aufgebracht wird aus einem hartmagnetischen Material.

Die Komponente, insbesondere ein Teilungsring, der ersten Bauteilgruppe, auf welche später die Winkelskalierung aufgebracht wird, kann beim Zusammenbauen, also vor dem Aufbringen der Winkelskalierung, auf den Ring der ersten Bauteilgruppe montiert werden. Insbesondere kann die Komponente am Außenumfang des Rings montiert werden.

Mit Vorteil werden die Laufflächen mit Hilfe eines Schleif- Hon- oder Läppprozesses bearbeitet.

In vorteilhafter Weise wird beim Zusammenbauen der ersten Bauteilgruppe, der zweiten Bauteilgruppe und der Wälzkörper eine axiale und / oder radiale Vorspannung zwischen den Ringen erzeugt.

Gemäß einem weiteren Aspekt der Erfindung umfasst das Winkelmesssystem eine erste Bauteilgruppe und eine zweite Bauteilgruppe, wobei die erste Bauteilgruppe relativ zur zweiten Bauteilgruppe um eine Achse drehbar gelagert ist. Weiterhin weist die erste Bauteilgruppe einen Ring mit einer Lauffläche und eine Winkelskalierung auf. Die zweite Bauteilgruppe weist einen Sensor zur Abtastung der Winkelskalierung auf sowie eine Leiterplatte mit einer elektronischen Schaltung zur Auswertung von durch die Abtastung erzeugbaren Signale des Sensors. Die zweite Bauteilgruppe umfasst zudem einen massiven Ring an dem eine weitere Lauffläche angeordnet ist und weist eine erste Ausnehmung zur Aufnahme der Leiterplatte auf. Ferner weist die zweite Bauteilgruppe zur Aufnahme eines elektrischen Leiters eine zweite Ausnehmung auf. Der elektrische Leiter ist vom Sensor beabstandet angeordnet und verbindet den Sensor mit der elektronischen Schaltung elektrisch.

In weiterer, Ausgestaltung der Erfindung ist eine Ausdehnung der ersten Ausnehmung des Rings der zweiten Bauteilgruppe in einer Richtung parallel zur Achse größer als eine Ausdehnung der ersten Ausnehmung in Umfangsrichtung. Insbesondere ist die größte Ausdehnung der ersten Ausnehmung in einer Richtung parallel zur Achse größer als die größte Ausdehnung der ersten Ausnehmung in Umfangsrichtung.

Der Ring der zweiten Bauteilgruppe weist ein axiales Außenmaß auf, welches mit Vorteil mindestens 1,5-mal so groß ist als die Ausdehnung der ersten Ausnehmung des Rings der zweiten Bauteilgruppe in einer Richtung parallel zur Achse. Insbesondere kann das axiale Außenmaß des betreffenden Rings mindestens 1,75-mal oder mindestens 2-mal so groß sein als die Ausdehnung der ersten Ausnehmung des Rings der zweiten Bauteilgruppe in einer Richtung parallel zur Achse.

Mit Vorteil weist der Ring der zweiten Bauteilgruppe eine dritte Ausnehmung zur Aufnahme des Sensors auf. Mit Vorteil kann der Sensor vor dem Zusammenbauen - insbesondere ausschließlich vor dem Zusammenbauen - der ersten Bauteilgruppe, der zweiten Bauteilgruppe und der Wälzkörper an der zweiten Bauteilgruppe montiert werden. Insbesondere kann auch der elektrische Leiter bereits vor dem Zusammenbauen der ersten Bauteilgruppe, der zweiten Bauteilgruppe und der Wälzkörper an der zweiten Bauteilgruppe montiert werden.

Insbesondere im Hinblick auf eine störungsunanfällige Bauweise des Winkelmesssystems, ist der Ring der zweiten Bauteilgruppe mit Vorteil als ein metallischer Ring, insbesondere als ein Stahl-Ring, ausgestaltet.

In Weiterbildung der Erfindung ist die Ausdehnung der ersten Ausnehmung größer als die Ausdehnung der zweiten Ausnehmung, jeweils bezogen auf eine Richtung parallel zur Achse. Dies gilt insbesondere für die jeweils größten Ausdehnungen der zweiten Ausnehmung.

Der elektrische Leiter kann einen Querschnitt mit unterschiedlichen Außenmaßen aufweisen, beispielsweise einen Rechteckquerschnitt, der naturgemäß zwei unterschiedliche Kantenlängen als jeweiliges Außenmaß aufweist. Dabei ist das größere Außenmaß in einer Richtung parallel zur Achse angeordnet. Die gleiche Betrachtung kann beispielsweise auch auf Leiter mit elliptischem Querschnitt angewendet werden.

Die erste Ausnehmung kann so ausgestaltet sein, dass die Leiterplatte in radialer Richtung, insbesondere in einer Richtung zur Achse hin, in die erste Ausnehmung eingeführt werden kann. Insbesondere weist dann die erste Ausnehmung eine Öffnung am Außenumfang des Ringes der zweiten Bauteilgruppe auf. Ferner kann die dritte Ausnehmung so ausgestaltet sein, dass der Sensor in einer Richtung von der Achse wegführend, radial nach außen in die dritte Ausnehmung eingeführt werden kann. Entsprechend kann dann die dritte Ausnehmung eine Öffnung am Innenumfang des Ringes der zweiten Bauteilgruppe aufweisen.

Vorteilhafte Ausführungsformen des erfindungsgemäßen Winkelmesssystems und des erfindungsgemäßen Verfahrens sind aus den Maßnahmen in den vom Anspruch 1 bzw. 10 abhängigen Ansprüchen zu entnehmen.

Weitere Vorteile, sowie Einzelheiten des erfindungsgemäßen Winkelmesssystems und Verfahrens ergeben sich aus der nachfolgenden Beschreibung eines Ausführungsbeispiels anhand der beiliegenden Figuren.

Es zeigen die
- Figur 1: eine Teilschnittansicht durch ein Winkelmesssystem,
- Figur 2: eine Teil-Draufsicht auf einen Ring des Winkelmesssystems mit einer Winkelskalierung,

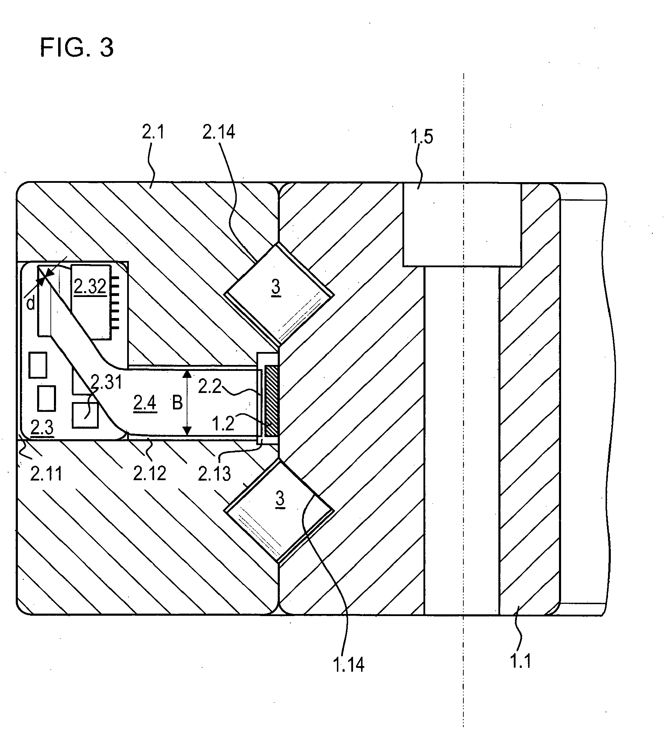

- Figur 3: eine Schnittdarstellung durch das Winkelmesssystem,
- Figur 4a: eine Draufsicht auf einen Teil des Winkelmesssystems,
- Figur 4b: eine Seitenansicht auf einen Teilbereich des Winkelmesssystems.

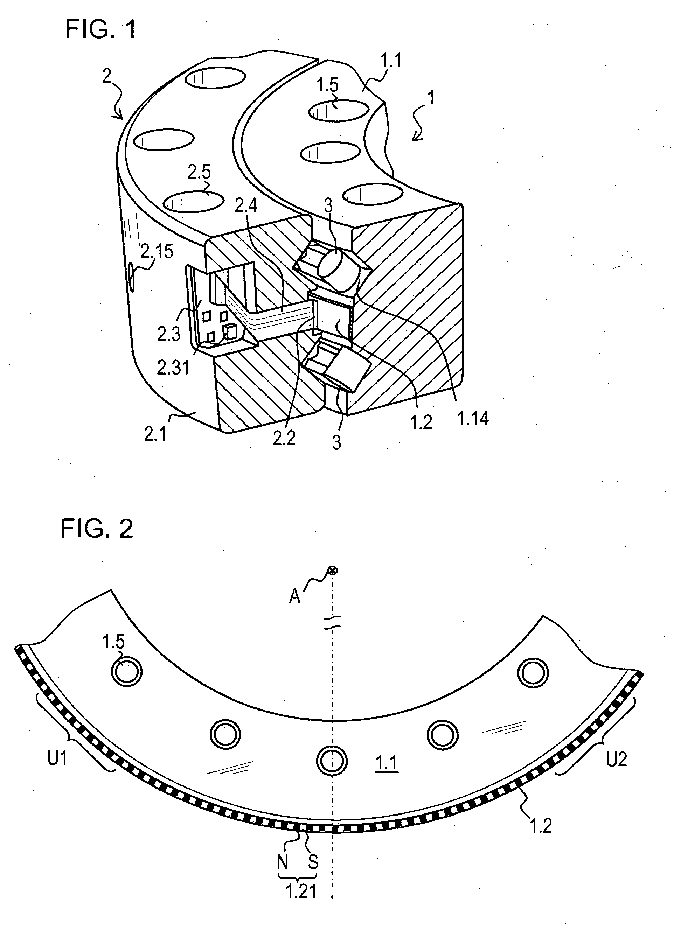

Gemäß der Figur 1 umfasst das erfindungsgemäße Winkelmesssystem eine erste Bauteilgruppe 1 und eine zweite Bauteilgruppe 2, wobei im vorgestellten Ausführungsbeispiel die erste Bauteilgruppe 1 als Rotor und die zweite Bauteilgruppe 2 als Stator dienen. Die erste Bauteilgruppe 1 umfasst einen Ring, der im vorliegenden Ausführungsbeispiel als Innenring 1.1 bezeichnet wird. Entsprechend wird ein weiterer Ring, welcher der zweiten Bauteilgruppe 2 zuzuordnen ist, hier als Außenring 2.1 benannt.

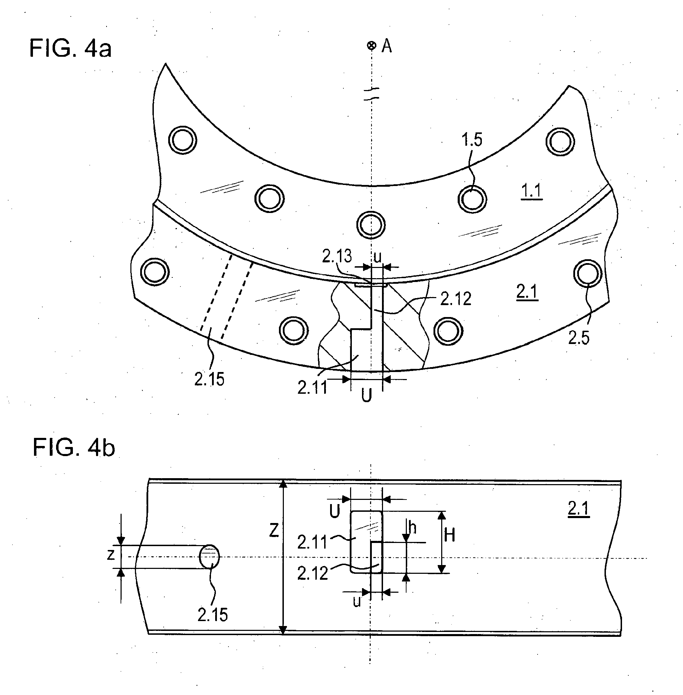

Bei dem neuen Verfahren zur Herstellung eines Winkelmesssystems werden zunächst der Innenring 1.1 und der Außenring 2.1 hergestellt. Dabei werden die Konturen anfangs vergleichsweise grob spanabtragend herausgearbeitet. Das axiale Außenmaß Z (siehe Figur 4b) des Außenrings 2.1 beträgt im vorliegenden Ausführungsbeispiel 70 mm. Weiterhin wird in den Außenring 2.1 eine radial ausgerichtete Öffnung 2.15, hier in Form einer zylindrischen Bohrung, eingearbeitet. Die axiale Ausdehnung z der Öffnung 2.15, bzw. der Durchmesser der Bohrung beträgt hier 10 mm, so dass sich also hier ein Verhältnis z/Z = 1/7 ergibt. In dieser Herstellungsphase wird zudem in den Außenring 2.1 ein Hohlraum eingearbeitet, der drei Kammern, bzw. drei Ausnehmungen 2.11, 2.12. 2.13 umfasst. Dabei weist die radial äußerste Ausnehmung 2.11 das größte Volumen auf. Die weiter innen liegende Ausnehmung 2.12 verbindet die beiden benachbarten Ausnehmungen 2.11 und 2.13.

In einem weiteren Schritt werden am Innenring 1.1 und am Außenring 2.1 jeweils fein bearbeitete Laufflächen 1.14, 2.14 durch einen Läppprozess erzeugt.

Im Zuge der weiteren Montage wird dann zunächst ein Sensor 2.2, z.B. ein MR-Sensor, mit einem elektrischen Leiter 2.4, hier ein Flexleiter im Außenring 2.1 montiert. Der elektrische Leiter 2.4 weist einen rechteckförmigen Querschnitt auf und hat demnach unterschiedliche Außenmaße B, d. Dabei ist die Dicke d im Verhältnis zur Breite B relativ gering. Bei der Montage wird der elektrische Leiter 2.4 von der Innenseite des Außenrings 2.1 her in die dritte Ausnehmung 2.13 eingeführt, wobei das größere Außenmaß B des elektrischen Leiters 2.4 in einer Richtung parallel zur Achse A angeordnet ist. Danach werden der Sensor 2.2 und der elektrische Leiter 2.4 radial nach außen bewegt, bis der Sensor 2.2 in der dritten Ausnehmung 2.13 platziert ist und der elektrische Leiter 2.4 durch die zweite Ausnehmung 2.12 hindurch in die erste Ausnehmung 2.11 ragt. Entsprechend ist die dritte Ausnehmung 2.13 also so ausgestaltet ist, dass der Sensor 2.2 in einer Richtung von der Achse A wegführend in die Ausnehmung 2.11 eingeführt werden kann.

Als nächstes wird das Ende des elektrischen Leiters 2.4 radial nach außen gezogen, so dass sich dieses außerhalb des Außenrings 2.1 befindet. In dieser Stellung wird dieses Ende des elektrischen Leiters 2.4 dann mit einer elektrischen Kupplung 2.32 auf einer Leiterplatte 2.3 verbunden. Auf der Leiteplatte 2.3 befinden sich mehrere elektronische Bauteile, unter anderem eines mit einer elektronischen Schaltung 2.31 zur Auswertung von Signalen des Sensors 2.2.

Die erste Ausnehmung 2.11 ist radial nach außen hin offen, also so ausgestaltet, dass die Leiterplatte 2.3 in einer Richtung zur Achse A hin in die Ausnehmung 2.11 eingeführt werden kann. Entsprechend wird also die Leiterplatte 2.3 in die erste Ausnehmung 2.11 eingeführt und wird dann in der ersten Ausnehmung 2.11 fixiert. Dabei ist die Leiterplatte 2.3 so orientiert, dass diese parallel zur Achse A ausgerichtet ist, also die Ebene der Leiterplatte 2.3 parallel zur Achse A ist.

Weiterhin wird auf den Außenumfang des Innenrings 1.1 ein Teilungsring 1.2 montiert. Dieser Teilungsring 1.2 besteht aus einem hartmagnetischen Material, hier eine Eisen-Cobalt-Chrom-Legierung mit einer Koerzitivfeldstärke von etwa 38 kA/m. Der Teilungsring 1.2 weist in dieser Phase keine Winkelskalierung 2.11 bzw. kein Teilungsmuster auf.

Danach werden nun der Innenring 1.1 samt dem Teilungsring 1.2 und der Außenring 2.1 sowie die Wälzkörper 3 so zusammengebaut, dass die Wälzkörper 3 zwischen beiden Laufflächen 1.14, 2.14 angeordnet sind. Infolge der geometrischen Maße des Innenrings 1.1 der Wälzkörper 3 und des Außenrings 2.1 wird eine radiale und axiale Vorspannung zwischen dem Innenring 1.1 und dem Außenring 2.1 erzeugt. Somit ist eine Anordnung hergestellt, bei der die erste Bauteilgruppe 1 relativ zur zweiten Bauteilgruppe 2 um eine Achse A drehbar ist, wobei die Bauteilgruppen 1, 2 durch die axiale und radiale Vorspannung axial und radial spielfrei zueinander angeordnet sind.

Dadurch, dass die Leiterplatte 2.3 mit der elektronischen Schaltung 2.31 in der ersten Ausnehmung 2.11 durch den massiven Außenring 2.1 umgeben ist, ist ein optimaler Schutz gegen elektromagnetische Störungen gegeben. Das gleiche gilt auch für den elektrischen Leiter 2.4 in der zweiten Ausnehmung 2.12 und für den Sensor 2.2 in der dritten Ausnehmung 2.13. Zu beachten ist in diesem Zusammenhang, dass durch die präzise Herstellung des Außenrings 2.1, der Wälzkörper 3 und des Innenrings 1.1 ein minimaler Spalt zwischen dem Außenring 2.1 und dem Innenring 1.1 erreicht wird, was sich für die elektromagnetische Störungsunanfälligkeit positiv auswirkt. Zur weiteren Erhöhung der elektromagnetischen Störungsunanfälligkeit kann die erste Ausnehmung 2.11 an der Außenseite mit einem Deckel, insbesondere mit einem Metalldeckel verschlossen werden. Weiterhin kann die erste Ausnehmung 2.11 und ggf. auch die zweite und dritte Ausnehmung 2.12, 2.13 mit einem geeignetem Vergussmaterial gefüllt werden. Ein Kabelabgang kann beispielsweise durch eine Bohrung im Deckel hindurch realisiert werden, zur elektrischen Verbindung zwischen dem Winkelmesssystem und einer Folgeelektronik.

Die soweit montierte Einheit wird nunmehr an einer Teilungsmaschine befestigt. Die Teilungsmaschine dient dazu eine Winkelskalierung 1.21 (Fig. 2) auf den Teilungsring 1.2 aufzubringen. Die Teilungsmaschine umfasst eine Welle und einen Statorblock, an dem ein magnetischer Schreibkopf befestigt ist. Der Statorblock und die Welle sind unter Verwendung eines Luftlagers relativ zueinander drehbar. Zur Teilungsmaschine gehört weiterhin eine überaus exakte Winkelmesseinrichtung, die dazu dient, die Winkellage der Welle gegenüber dem Statorblock genau zu bestimmen.

Vor dem Aufbringen der Winkelskalierung 1.21 wird zunächst der Innenring 1.1 an der Welle der Teilungsmaschine drehfest festgelegt. Ebenso wird auch der Außenring 2.1 am Statorblock fixiert. In diesem Montagezustand bewirkt folglich eine Drehung der Welle eine Drehung des Innenrings 1.1 und damit auch des Teilungsrings 1.2.

Danach wird in die Öffnung 2.15 der magnetische Schreibkopf eingeführt. Sodann wird die Winkelskalierung 1.21, bestehend aus einer Vielzahl von magnetischen (nicht sichtbaren) Teilungsstrichen, unmittelbar auf die Mantelseite des Teilungsrings 1.2 aufgebracht. Dabei werden schrittweise durch entsprechende Bestromung des Schreibkopfes auf der Mantelseite zur Achse A im Wesentlichen parallele Teilungsstriche als Winkelskalierung 1.21 erzeugt, wobei sich Nord- und Südpole entlang des Umfangs abwechseln. Jeder Teilungsstrich ist dabei radial polarisiert. Im vorgestellten Ausführungsbeispiel beträgt der Abstand der Mitten der Teilungsstriche in Umfangsrichtung 200 µm. Es wird hierbei nach jedem erzeugten Teilungsstrich auf der Mantelseite des Teilungsrings 1.2 die Welle minimal weitergedreht, so dass der nächste Teilungsstrich aufgebracht werden kann. Zwischen den jeweiligen Magnetisierungsschritten wird also der Teilungsring 1.2, kontrolliert durch die Winkelmesseinrichtung der Teilungsmaschine, um die Achse A weitergeschwenkt. Trotzt der überaus präzisen Herstellung des Innenrings 1.1, des Außenrings 2.1 und der Wälzkörper 3 weist die Anordnung naturgemäß noch Abweichungen von ihrer Idealgeometrie auf. Entsprechend führen Rundlaufabweichungen zu in Umfangsrichtung unterschiedlichen geometrischen Mustern der Winkelskalierung 1.21, weil die Winkelskalierung 1.21 auf dem Teilungsring 1.2 in einer Anbausituation aufgebracht ist, die der endgültigen Lagerung entspricht und zudem die Anordnung radial und axial vorgespannt ist. So kann auf Grund der genannten Rundlaufabweichungen, z. B. einer Exzentrizität oder eines Taumelfehlers, das geometrische Muster der Winkelskalierung 1.21 im Bereich U1 von dem Muster im Bereich U2 abweichen, und zwar abhängig von den lokal an den jeweiligen Umfangspunkten vorliegenden Rundlaufabweichung. Im Ergebnis können unterschiedliche Muster durch unterschiedliche Abstände der Teilungsstriche oder durch unterschiedliche Neigungen der Teilungsstriche gegenüber der Achse A charakterisiert sein. Wegen des hohen Maßes an Präzision sind diese Unterschiede in den Mustern einzelner Bereiche vergleichsweise gering. Dennoch tragen sie zur Erhöhung der Messgenauigkeit des Winkelmesssystems bei.

Nachdem die Winkelskalierung 1.21 aufgebracht ist, kann die soweit vormontierte Einheit, bestehend aus der ersten und der zweiten Bauteilgruppe 1, 2 von der Teilungsmaschine demontiert werden.

Durch die überaus hohe mechanische Steifigkeit des Winkelmesssystems wird das Messergebnis einerseits wegen des minimalen Spalts zwischen dem Außenring 2.1 und dem Innenring 1.1 verbessert, andererseits kann dadurch auch ein kleiner und stets konstanter Abtastabstand zwischen dem Sensor 2.2 und dem Teilungsring 1.2 verwirklicht werden, so dass eine erhöhte Signalqualität erreichbar ist. Erst durch diese Maßnahmen ist es möglich mit hoher Auflösung magnetische Winkelskalierungen 1.21 auszulesen, die Abstände zwischen den Mitten der Teilungsstriche in Umfangsrichtung von weniger als 300 µm, insbesondere weniger als 250 µm oder weniger als 200 µm aufweisen.

Einen wesentlichen Beitrag zur Erreichung der hohen mechanischen Steifigkeit des Winkelmesssystems liefert die spezielle Ausgestaltung der Ausnehmungen 2.11, 2.12, 2.13 und der Öffnung 2.15, wie sie in den Figuren 4a und 4b gezeigt ist. Zunächst wurde die Öffnung 2.15 so bemessen, dass deren Ausdehnung z vergleichsweise klein gegenüber der axialen Ausdehnung Z des Außenrings 2.1 ist. Des Weiteren sind die erste und die zweite Ausnehmung 2.11, 2.12 so ausgestaltet, dass deren jeweilige Ausdehnungen in Umfangsrichtung U, u kleiner sind als deren axiale Ausdehnungen H, h, also U<H, u<h. Insbesondere weist die erste Ausnehmung 2.11 des Außenrings in einer Richtung parallel zur Achse A ihre größte Ausdehnung H auf. Ferner ist der Außenring 2.1 so dimensioniert, dass die Ausdehnung H der ersten Ausnehmung 2.11 größer ist als die Ausdehnung h der zweiten Ausnehmung 2.12 (H>h), jeweils bezogen auf eine Richtung parallel zur Achse A. Weiterhin ist die Ausdehnung U der ersten Ausnehmung 2.11 größer als die Ausdehnung u der zweiten Ausnehmung 2.12 (U>u), jeweils bezogen auf die Umfangsrichtung.

Das Winkelmesssystem stellt eine selbstständige Einheit dar, die vom Anwender einfach an einer zu messenden Welle montiert werden kann aber überaus exakte Winkelpositionen liefert. Auf Grund der überaus präzisen Ausgestaltung des Winkelmesssystems kann auf eine Ausgleichskupplung verzichtet werden.

Im Betrieb des Winkelmesssystems liefert der Sensor 2.2 entsprechend der dem Sensor 2.2 gegenüber liegenden Pole der Winkelskalierung 1.21 positionsabhängige Ströme bzw. Spannungen. Diese Ströme bzw. Spannungen werden in der elektronischen Schaltung 2.31 verarbeitet und letztlich digitalisiert. Die digitalen Signale können dann vom Winkelmesssystem an eine Folgeelektronik weitergeleitet werden, wobei durch die Digitalisierung eine weitgehend störungsunanfällige Datenübertragung ermöglicht ist.

Durch die integrierte Bauweise ist ferner das Winkelmesssystem sehr kompakt in seinen Außenmaßen und weist insbesondere eine überaus kleine maximale axiale Ausdehnung Z auf. Im gezeigten Ausführungsbeispiel beträgt die axiale Ausdehnung Z nur etwa 25 % des maximalen Außenradius. Des Weiteren wird durch die vorgestellte Bauweise ein hochwertiges Winkelmesssystem geschaffen, welches für große Durchmesser der zu messenden Wellen geeignet ist. So weist das hier vorgestellte Winkelmesssystem eine entsprechende Öffnung auf, deren Innenradius etwa 66% des maximalen Außenradius ausmacht.

## Patentansprüche

1. Winkelmesssystem, umfassend eine erste Bauteilgruppe (1) und eine zweite Bauteilgruppe (2), wobei die erste Bauteilgruppe (1) relativ zur zweiten Bauteilgruppe (2) um eine Achse (A) drehbar gelagert ist und
- die erste Bauteilgruppe (1) einen Ring (1.1) mit einer Lauffläche (1.14) und einer Winkelskalierung (1.21) aufweist,
- die zweite Bauteilgruppe (2) einen
weiteren Ring (2.1) mit einer weiteren Lauffläche (2.14), sowie einen Sensor (2.2) zur Abtastung der Winkelskalierung (1.21) aufweist, und
- zwischen den Laufflächen (1.14, 2.14) Wälzkörper (3) angeordnet sind, wobei
die Winkelskalierung (1.21) in der Weise aufgebracht ist, dass ein geometrisches Muster der Winkelskalierung (1.21) in einem ersten Bereich (U1) von einem geometrischen Muster der Winkelskalierung (1.21) in einem zweiten Bereich (U2) in Abhängigkeit von Rundlaufabweichungen der Laufflächen (1.14, 2.14) und / oder der Wälzkörper (3) abweicht.

2. Winkelmesssystem gemäß dem Anspruch 1, wobei der Ring (2.1) der zweiten Bauteilgruppe (2) eine radial durchgängige Öffnung (2.15) aufweist, durch welche die Winkelskalierung (1.21) aufbringbar ist.

3. Winkelmesssystem gemäß einem der vorhergehenden Ansprüche, wobei die Winkelskalierung (1.21) mit einer Richtungskomponente parallel zur Achse (A) ausgerichtet ist.

4. Winkelmesssystem gemäß einem der vorhergehenden Ansprüche, wobei erste Bauteilgruppe (1) und die zweite Bauteilgruppe (2), sowie die Wälzkörper (3) so ausgestaltet sind, dass die erste Bauteilgruppe (1) und die zweite Bauteilgruppe (2) axial spielfrei zueinander angeordnet sind.

5. Winkelmesssystem gemäß einem der vorhergehenden Ansprüche, wobei die erste Bauteilgruppe (1) und die zweite Bauteilgruppe (2) jeweils zwei Laufflächen (1.14, 2.14) aufweisen zwischen denen jeweils Wälzkörper (3) angeordnet sind, wobei die Winkelskalierung (1.21) sowie die Öffnung (2.15) axial zwischen diesen Laufflächen (1.14, 2.14) angeordnet sind.

6. Winkelmesssystem gemäß einem der vorhergehenden Ansprüche, wobei das geometrische Muster der Winkelskalierung (1.21) aus Bereichen mit unterschiedlicher magnetischer Polarisierung besteht.

7. Winkelmesssystem gemäß einem der vorhergehenden Ansprüche, wobei der Ring (2.1) der zweiten Bauteilgruppe (2) eine zweite Ausnehmung (2.12) zur Aufnahme eines elektrischen Leiters (2.4) aufweist, wobei der Leiter (2.4) den Sensor (2.2) mit der vom Sensor (2.3) beabstandet angeordneten elektronischen Schaltung (2.31) elektrisch verbindet.

8. Verfahren zur Herstellung eines Winkelmesssystems umfassend eine erste Bauteilgruppe (1) und eine zweite Bauteilgruppe (2), wobei die erste Bauteilgruppe (1) relativ zur zweiten Bauteilgruppe (2) um eine Achse (A) drehbar gelagert ist und die erste Bauteilgruppe (1) einen Ring (1.1) aufweist, und die zweite Bauteilgruppe (2) einen weiteren Ring (2.1) und einen Sensor (2.2) aufweist, mit folgenden Schritten:
• Herstellen der Ringe (1.1, 2.1), an denen jeweils zumindest eine fein bearbeitete Lauffläche (1.14, 2.14) erzeugt wird,
• Zusammenbauen des Winkelmesssystems in einer Weise, dass die Lauffläche (1.14) des ersten Rings (1.1) der Lauffläche (2.14) des zweiten Rings (2.1) gegenüber liegt und Wälzkörper (3) zwischen beiden Laufflächen (1.14, 2.14) angeordnet sind, in der Weise, dass die erste Bauteilgruppe (1) und die zweite Bauteilgruppe (2) axial spielfrei zueinander angeordnet sind,
• Festlegen der Ringe (1.1, 2.1) an relativ zueinander drehbaren Elementen einer Teilungsmaschine,
• Aufbringen einer Winkelskalierung (1.21) auf eine Komponente (1.1, 1.2) der ersten Bauteilgruppe (1), wobei in diesem Schritt die Ringe (1.1, 2.1) in der Teilungsmaschine relativ zueinander um die Achse (A) gedreht werden.

9. Verfahren zur Herstellung eines Winkelmesssystems gemäß dem Anspruch 8, wobei beim Herstellen des Rings (2.1) des zweiten Bauelements (2) eine Öffnung (2.15) eingearbeitet wird und die Winkelskalierung (1.21) unter Verwendung der Öffnung (2.15) auf die Komponente (1.1, 1.2) der ersten Bauteilgruppe (1) aufgebracht wird.

10. Verfahren zur Herstellung eines Winkelmesssystems gemäß dem Anspruch 9, wobei in die Öffnung (2.15) ein magnetischer Schreibkopf eingeführt wird und dann die Winkelskalierung (1.21), die aus Bereichen mit unterschiedlicher magnetischer Polarisierung besteht, aufgebracht wird.

11. Verfahren zur Herstellung eines Winkelmesssystems gemäß einem der Ansprüche 8 bis 10, wobei die Komponente (1.2) der ersten Bauteilgruppe (1), auf welche Winkelskalierung (1.21) aufgebracht wird, beim Zusammenbauen, vor dem Aufbringen der Winkelskalierung (1.21), auf den Ring (1.1) der ersten Bauteilgruppe (1) montiert wird.

12. Verfahren zur Herstellung eines Winkelmesssystems gemäß einem der Ansprüche 8 bis 11, wobei beim Zusammenbauen der ersten Bauteilgruppe (1), der zweiten Bauteilgruppe (2) und der Wälzkörper (3) eine radiale und / oder axiale Vorspannung zwischen den Ringen (1.1, 2.1) erzeugt wird.

13. Verfahren zur Herstellung eines Winkelmesssystems gemäß einem der Ansprüche 8 bis 12, wobei vor dem beim Zusammenbauen der ersten Bauteilgruppe (1), der zweiten Bauteilgruppe (2) und der Wälzkörper (3) ein Sensor (2.2) an der zweiten Bauteilgruppe (2) montiert wird.

14. Verfahren zur Herstellung eines Winkelmesssystems gemäß einem der Ansprüche 8 bis 13, wobei die Winkelskalierung (1.21) mit einer Richtungskomponente parallel zur Achse (A) aufgebracht wird.

15. Verfahren zur Herstellung eines Winkelmesssystems gemäß einem der Ansprüche 8 bis 14, wobei die Laufflächen (1.14, 2.14) mit Hilfe eines Schleif- Hon- oder Läppprozesses bearbeitet werden.

## Claims

1. Angle measuring system, comprising a first component group (1) and a second component group (2), wherein the first component group (1) is mounted rotatably about an axis (A) in relation to the second component group (2) and
- the first component group (1) has a ring (1.1) with a running surface (1.14) and an angle scaling (1.21),
- the second component group (2) has
• a further ring (2.1) with a further running surface (2.14), and
• a sensor (2.2) for scanning the angle scaling (1.21), and
- rolling elements (3) are arranged between the running surfaces (1.14, 2.14), wherein
the angle scaling (1.21) is applied in such a way that a geometrical pattern of the angle scaling (1.21) in a first region (U1) differs from a geometrical pattern of the angle scaling (1.21) in a second region (U2) in dependence on radial runouts of the running surfaces (1.14, 2.14) and/or of the rolling elements (3).

2. Angle measuring system according to Claim 1, wherein the ring (2.1) of the second component group (2) has a radially passing-through opening (2.15), through which the angle scaling (1.21) can be applied.

3. Angle measuring system according to one of the preceding claims, wherein the angle scaling (1.21) is aligned with a directional component parallel to the axis (A).

4. Angle measuring system according to one of the preceding claims, wherein the first component group (1) and the second component group (2) and also the rolling elements (3) are designed in such a way that the first component group (1) and the second component group (2) are arranged axially free from play in relation to one another.

5. Angle measuring system according to one of the preceding claims, wherein the first component group (1) and the second component group (2) each have two running surfaces (1.14, 2.14), between which rolling elements (3) are respectively arranged, wherein the angle scaling (1.21) and also the opening (2.15) are arranged axially between these running surfaces (1.14, 2.14).

6. Angle measuring system according to one of the preceding claims, wherein the geometrical pattern of the angle scaling (1.21) consists of regions with different magnetic polarization.

7. Angle measuring system according to one of the preceding claims, wherein the ring (2.1) of the second component group (2) has a second recess (2.12) for receiving an electrical conductor (2.4), wherein the conductor (2.4) electrically connects the sensor (2.2) to the electronic circuit (2.31) set apart from the sensor (2.3).

8. Method for producing an angle measuring system comprising a first component group (1) and a second component group (2), wherein the first component group (1) is mounted rotatably about an axis (A) in relation to the second component group (2) and the first component group (1) has a ring (1.1), and the second component group (2) has a further ring (2.1) and a sensor (2.2), with the following steps:
• producing the rings (1.1, 2.1), on each of which at least one finely machined running surface (1.14, 2.14) is created,
• assembling the angle measuring system in such a way that the running surface (1.14) of the first ring (1.1) is situated opposite the running surface (2.14) of the second ring (2.1) and rolling elements (3) are arranged between the two running surfaces (1.14, 2.14) in such a way that the first component group (1) and the second component group (2) are axially free from play in relation to one another,
• fixing the rings (1.1, 2.1) to elements of a scaling machine that are rotatable in relation to one another,
• applying an angle scaling (1.21) to a component (1.1, 1.2) of the first component group (1), wherein in this step the rings (1.1, 2.1) in the scaling machine are rotated about the axis (A) in relation to one another.

9. Method for producing an angle measuring system according to Claim 8, wherein, for producing the ring (2.1) of the second component group (2), an opening (2.15) is made and the angle scaling (1.21) is applied to the component (1.1, 1.2) of the first component group (1) by using the opening (2.15).

10. Method for producing an angle measuring system according to Claim 9, wherein a magnetic writing head is inserted into the opening (2.15) and then the angle scaling (1.21), which consists of regions with different magnetic polarization, is applied.

11. Method for producing an angle measuring system according to one of Claims 8 to 10, wherein the component (1.2) of the first component group (1) to which the angle scaling (1.21) is applied is mounted on the ring (1.1) of the first component group (1) during the assembly, before the application of the angle scaling (1.21).

12. Method for producing an angle measuring system according to one of Claims 8 to 11, wherein, during the assembly of the first component group (1), the second component group (2) and the rolling elements (3), a radial and/or axial prestress is created between the rings (1.1, 2.1).

13. Method for producing an angle measuring system according to one of Claims 8 to 12, wherein, before the assembly of the first component group (1), the second component group (2) and the rolling elements (3), a sensor (2.2) is mounted on the second component group (2).

14. Method for producing an angle measuring system according to one of Claims 8 to 13, wherein the angle scaling (1.21) is applied with a directional component parallel to the axis (A).

15. Method for producing an angle measuring system according to one of Claims 8 to 14, wherein the running surfaces (1.14, 2.14) are machined with the aid of a grinding, honing or lapping process.

## Revendications

1. Système de mesure angulaire, comprenant un premier groupe de composants (1) et un deuxième groupe de composants (2), le premier groupe de composants (1) étant supporté de manière à pouvoir tourner autour d'un axe (A) par rapport au deuxième groupe de composants (2) et
- le premier groupe de composants (1) présentant une bague (1.1) avec une surface de roulement (1.14) et une échelle de graduation angulaire (1.21),
- le deuxième groupe de composants (2) présentant une bague supplémentaire (2.1) avec une surface de roulement supplémentaire (2.14), ainsi qu'un capteur (2.2) pour balayer l'échelle de graduation angulaire (1.21), et
- entre les surfaces de roulement (1.14, 2.14) étant disposés des corps de roulement (3),
l'échelle de graduation angulaire (1.21) étant appliquée de telle sorte qu'un motif géométrique de l'échelle de graduation angulaire (1.21) dans une première région (U1) s'écarte d'un motif géométrique de l'échelle de graduation angulaire (1.21) dans une deuxième région (U2) en fonction d'écarts de concentricité des surfaces de roulement (1.14, 2.14) et/ou des corps de roulement (3).

2. Système de mesure angulaire selon la revendication 1, dans lequel la bague (2.1) du deuxième groupe de composants (2) présente une ouverture radialement traversante (2.15) à travers laquelle peut être appliquée l'échelle de graduation angulaire (1.21).

3. Système de mesure angulaire selon l'une quelconque des revendications précédentes, dans lequel l'échelle de graduation angulaire (1.21) est orientée avec une composante directionnelle parallèle à l'axe (A).

4. Système de mesure angulaire selon l'une quelconque des revendications précédentes, dans lequel le premier groupe de composants (1) et le deuxième groupe de composants (2) ainsi que les corps de roulement (3) sont configurés de telle sorte que le premier groupe de composants (1) et le deuxième groupe de composants (2) soient disposés axialement sans jeu l'un par rapport à l'autre.

5. Système de mesure angulaire selon l'une quelconque des revendications précédentes, dans lequel le premier groupe de composants (1) et le deuxième groupe de composants (2) présentent chacun deux surfaces de roulement (1.14, 2.14) entre lesquelles sont disposés à chaque fois des corps de roulement (3), l'échelle de graduation angulaire (1.21) ainsi que l'ouverture (2.15) étant disposées axialement entre ces surfaces de roulement (1.14, 2.14).

6. Système de mesure angulaire selon l'une quelconque des revendications précédentes, dans lequel le motif géométrique de l'échelle de graduation angulaire (1.21) est constitué de régions de polarisation magnétique différente.

7. Système de mesure angulaire selon l'une quelconque des revendications précédentes, dans lequel la bague (2.1) du deuxième groupe de composants (2) présente un deuxième évidement (2.12) pour recevoir un conducteur électrique (2.4), le conducteur (2.4) reliant électriquement le capteur (2.2) au branchement électronique (2.31) disposé à distance du capteur (2.3).

8. Procédé de fabrication d'un système de mesure angulaire comprenant un premier groupe de composants (1) et un deuxième groupe de composants (2), le premier groupe de composants (1) étant supporté de manière à pouvoir tourner autour d'un axe (A) par rapport au deuxième groupe de composants (2) et le premier groupe de composants (1) présentant une bague (1.1) et le deuxième groupe de composants (2) présentant une bague supplémentaire (2.1) et un capteur (2.2), comprenant les étapes suivantes :
- fabrication des bagues (1.1, 2.1) sur lesquelles est à chaque fois réalisée au moins une surface de roulement finement usinée (1.14, 2.14),
- assemblage du système de mesure angulaire de manière à ce que la surface de roulement (1.14) de la première bague (1.1) soit opposée à la surface de roulement (2.14) de la deuxième bague (2.1) et que des corps de roulement (3) entre les deux surfaces de roulement (1.14, 2.14) soient disposés de telle sorte que le premier groupe de composants (1) et le deuxième groupe de composants (2) soient disposés axialement sans jeu l'un par rapport à l'autre,
- fixation des bagues (1.1, 2.1) sur des éléments pouvant tourner l'un par rapport à l'autre d'une diviseuse,
- application d'une échelle de graduation angulaire (1.21) sur un composant (1.1, 1.2) du premier groupe de composants (1), dans cette étape les bagues (1.1, 2.1) étant tournées dans la diviseuse les unes par rapport aux autres autour de l'axe (A).

9. Procédé de fabrication d'un système de mesure angulaire selon la revendication 8, dans lequel lors de la fabrication de la bague (2.1) du deuxième groupe de composants (2) une ouverture (2.15) est pratiquée et l'échelle de graduation angulaire (1.21) est appliquée en utilisant l'ouverture (2.15) sur le composant (1.1, 1.2) du premier groupe de composants (1).

10. Procédé de fabrication d'un système de mesure angulaire selon la revendication 9, dans lequel une tête d'écriture magnétique est introduite dans l'ouverture (2.15) et ensuite l'échelle de graduation angulaire (1.21), qui se compose de régions de polarisation magnétique différente, est appliquée.

11. Procédé de fabrication d'un système de mesure angulaire selon l'une quelconque des revendications 8 à 10, dans lequel le composant (1.2) du premier groupe de composants (1), sur lequel est appliquée l'échelle de graduation angulaire (1.21), lors de l'assemblage, avant l'application de l'échelle de graduation angulaire (1.21), est monté sur la bague (1.1) du premier groupe de composants (1).

12. Procédé de fabrication d'un système de mesure angulaire selon l'une quelconque des revendications 8 à 11, dans lequel, lors de l'assemblage du premier groupe de composants (1), du deuxième groupe de composants (2) et des corps de roulement (3), une précontrainte radiale et/ou axiale entre les bagues (1.1, 2.1) est réalisée.

13. Procédé de fabrication d'un système de mesure angulaire selon l'une quelconque des revendications 8 à 12, dans lequel, avant l'assemblage du premier groupe de composants (1), du deuxième groupe de composants (2) et des corps de roulement (3), un capteur (2.2) est monté sur le deuxième groupe de composants (2).

14. Procédé de fabrication d'un système de mesure angulaire selon l'une quelconque des revendications 8 à 13, dans lequel l'échelle de graduation angulaire (1.21) est appliquée avec une composante directionnelle parallèle à l'axe (A).

15. Procédé de fabrication d'un système de mesure angulaire selon l'une quelconque des revendications 8 à 14, dans lequel les surfaces de roulement (1.14, 2.14) sont usinées à l'aide d'un processus de meulage, de rodage ou de polissage.
